# EUROPEAN PATENT APPLICATION

(11) **EP 1 104 652 A1**
(43) Date of publication of application: **06.06.2001**
(21) Application number: 00203869.3
(22) Date of filing: 06.11.2000
(51) Int. Cl.: A23G 3/00, A23L 1/05

(54) **Hydrocolloid confectionery product**

(30) Priority: 03.12.1999 GB 9928688
(71) Applicant: SOCIETE DES PRODUITS NESTLE S.A., 1800 Vevey (CH)
(72) Inventor: Schmick, Frank, York YO19 5QZ (GB); Rettkowski, Meike, York YO31 7PF (GB)
(74) Representative: Pate, Frederick George

(57) **Abstract**

The present invention relates to a process for preparing a hydrocolloid confectionery product which comprises mixing one or more hydrocolloid and the remaining ingredients of the end product, cooking the formulation mixture thus obtained, shaping the cooked mass and causing the hydrocolloid in the cooked mass to gel. The present invention also relates to a hydrocolloid confectionery product prepared in accordance with the above process.

## Description

The present invention relates to process for preparing a hydrocolloid confectionery product. The present invention also provides a hydrocolloid confectionery product. The hydrocolloid confectionery product is preferably gelatin-free.

Hydrocolloid confectionery includes sugar gels which are products comprising a gelling agent in a sugar/glucose syrup system, for instance, gums and pastilles, and water gels which are products comprising a gelling agent in water, for instance, table jelly. Hydrocolloid confectionery now represents about half of the sugar confections sold and their popularity continues to grow. Hydrocolloids are the key ingredients of this class of confectionery. They gel and texturise but also stabilise by preventing syneresis, fixing flavours and inhibiting sugar crystallisation, give transparency, brilliance, adhesion and ease foaming for aerated jellies.

Some examples of hydrocolloids used in hydrocolloid confectionery are agar agar, xanthan gum, locust bean gum, gellan gum, gum arabic, pectin, gelatin, guar gum, carageenan and modified and/or unmodified starches. One of the most common of these hydrocolloids used in hydrocolloid confectionery is gelatin used primarily as a gelling agent. Gelatin has been used in confectionery manufacture for many years for its diverse functional properties, in particular, its textural, gel-forming, foam stabilising and emulsification properties. Of the hydrocolloids, gelatin is the most commonly used. Hydrocolloid confectionery comprising gelatin has a unique gelatin texture which is especially desirable to consumers.

However, food-grade gelatin is generally obtained from bovine or porcine raw materials and the use of gelatin is undesirable not only because of concerns about bovine spongiform encephalopathy (i.e. "BSE" or "mad-cow disease"), but also for the vegetarian population, as well as for certain ethnic groups who have concerns about the nature of meat used in certain food products and/or who observe certain dietary constraints concerning the consumption of meat and dairy products. In addition, as gelatin is a protein it is highly sensitive to thermal and highly acidic treatments and undergoes degradation causing loss in its functional properties, reduced cooking efficiencies, loss of active ingredient and possible fouling which necessitates frequent cleaning of the processing apparatus.

It is, therefore, desirable to provide a process for preparing a hydrocolloid confectionery product which excludes gelatin, therefore, overcoming the problems associated with gelatin, but which retains a satisfactory texture acceptable by the consumer. In particular, it is desirable to provide a process for preparing a confectionery product in which at least a portion, preferably all, of the gelatin is replaced in the product.

A further problem is that many confectionery products, such as starch moulded products, do not retain their moulded shape because of differential shrinkage during the drying stage used to give the desired texture at reduced moisture. This can interfere with the efficient further processing of the confectionery products by techniques such as panning and coating. Thus, it is also desirable to provide a process for the preparation of a hydrocolloid confectionery product which retains its shape during the further processing of such a confectionery product and can be easily panned.

It has been found that by using one or more hydrocolloids in the manufacture of a hydrocolloid confectionery product that the resultant confectionery product forms a heat-resistant gel structure during drying and, in addition, it is also possible to avoid the above disadvantages associated with gelatin whilst still providing a satisfactory texture in the end product. The use of a hydrocolloid system that is gelled before and during the drying of the moulded confectionery product, which is preferably fluid for moulding and gels subsequently, allows the manufacture of a bi-convex (lenticular) shaped end product of relatively large diameter which can be efficiently pan-coated without agglomeration.

The present invention provides a process for the preparation of a confectionery product which comprises mixing one or more hydrocolloid and the remaining ingredients of the end product, cooking the formulation mixture thus obtained, shaping the cooked mass and, after shaping the cooked mass, triggering the cooked mass to form a heat-resistant gel structure prior to drying wherein the heat-resistant gel structure is retained during further processing.

The hydrocolloid used can be any hydrocolloid that forms a heat resistant gel on setting such as agarose, xanthan gum, gellan gum, gum arabic, pectin, gelatin or carageenan. Preferably, the hydrocolloid used is selected from agarose, gellan, pectin and/or carrageenan. More preferably the hydrocolloid used is pectin and may include starch. Gelatin may also be used. A starch/pectin hydrocolloid confectionery product may be gelatin free.

The present invention additionally provides a process for the preparation of a hydrocolloid confectionery product comprising one or more hydrocolloids, preferably in which said hydrocolloid replaces at least a portion of the gelatin. According to an embodiment of the invention, the confectionery product is preferably gelatin-free and all of the gelatin, is replaced with said one or more hydrocolloids.

The cooked mass may be treated to trigger the initialisation of gelling of the hydrocolloid. The cooked mass may be acidified and/or the temperature may be reduced and/or salts may be added. In particular if a mixture of pectin and starch is used the hydrocolloid starts to gel after acidification and, as soon as the temperature falls below 90°C a heat-resistant gel structure is formed. This gel structure is retained during drying and during the further processing of the confectionery product. The cooked mass is acidified to a pH of 3.0 to 3.8, preferably to a pH of 3.2 to 3.4. The pH required is dependant on the specific grade of pectin used, the temperature and the moisture content of the liquor.

The process may also comprise the additional steps of flavouring the cooked mass and drying, sugar sanding and panning the deposited mass. Shaping the cooked mass may occur by depositing the cooked mass hot, eg at 100°C, into moulds.

According to the invention the hydrocolloid mixture may also include the addition of the additives, for example, acid, flavour, colour, humectants, etc. (acid, flavour etc. is normally added after cooking) to give a syrup having a desired final solids content.

The hydrocolloid confectionery products of the present invention may be prepared by conventional methods. The initial mixture of ingredients may be cooked by open pan boiling by use of a jet cooker, coil cooker, plate heat exchanger or a cooker extruder. The operating conditions will vary depending on the cooking equipment, formulation ingredients etc., which are selected.

The confectionery product may then be shaped using conventional techniques and subjected to a cooling/drying stage as required. The shaped product is dried, for instance by stoving which is a dehydration process at a specific temperature, humidity and time where the parameters may readily be selected by those skilled in the art. Because the gel structure retains the shape after cooking this enables further processing such as panning to be more effective. The gelled confectionery product has a bi-convex shape which is easily pannable and can thus be coated easily. Sweets which do not form such a gel structure prior to drying tend to have a concave shape and doubles tend to build up by agglomeration during panning thereby preventing effective further processing. The end product may then be sugar sanded and panned.

The invention further relates to a coated confectionery product prepared in accordance with the invention comprising one or more hydrocolloids. Coating may preferably occur by panning, with for example a soft sugar coating, a hard sugar coating or a chocolate/fat-based coating.

The present invention additionally provides a confectionery product comprising oxidised starch with another hydrocolloid, preferably in which said hydrocolloid replaces at least a portion of the gelatin. The confectionery product may be gelatin-free.

Oxidised starch is starch obtained from any source, such as, maize, potato etc., which has undergone an oxidation reaction. For example, oxidised starch is obtained when a (aqueous) starch suspension is treated with an oxidising agent, such as, sodium hydrochloride, which oxidises the primary alcohol group at the C6 position on the starch molecule to a carboxylic acid group. Oxidation introduces a high degree of steric hindrance into the molecule, preventing or greatly reducing the tendency for short chain fractions to reform as retrogradation bundles. The complex reaction involves hydrolysis, ring rupture and carboxylation (OH groups to COOH groups) of the starch molecule, to reduce the viscosity of the starch solution and a softer set back.

Techniques for detecting oxidised starch at a functional level (above approximately 1%) detect the carbonyl group which is specific to the oxidised starch. Suitable techniques include Fourier Transform Infra Red (FTIR) and solid state NMR.

According to the invention the hydrocolloid confectionery product may contain from 0.1 1 wt% to 20 wt% of hydrocolloid. Preferably the hydrocolloid confectionery product contains pectin in combination with starch. The hydrocolloid confectionery product may contain pectin in the range of 0.3 wt% to 2 wt%, preferably 1 wt%, and starch in the range of 3 wt% to 20 wt%, preferably 5wt% to 15wt% and especially 10wt%.

In addition to said one or more hydrocolloids, the confectionery product may contain usual ingredients such as a food-acceptable acid, for example, lactic acid, malic acid, tartaric acid, ascorbic acid, hydrochloric acid, citric acid, fruit juices, vegetable juices, fats etc. The amount added will depend on the final product but may be in the range of from 0.1% to 3%, in particular, from 1.0% to 2.5% by weight based on the weight of the confectionery product. The fruit juices are preferably in the range of 2 to 15%. The confectionery product may further comprise a humectant such as glycerol, flavour, artificial sweeteners for sugar free, products, emulsifiers e.g. lecithin, flavour enhancers e.g. talin, colour, protein, for example, egg white or milk protein in the case of aerated systems, and other additives, the amounts and type of which will depend on the end product. Suitable amounts of these additives are from 0.1 % to 5%, in particular, from 0.2-2.0% by weight based on the weight of the hydrocolloid confectionery product. The remainder of the confectionery product is a syrup comprising sugars, for example, glucose, sucrose syrup, invert sugar, lactose or sugar replacers such as sugar alcohols, polydextrose together with water. The amount of water in the finished hydrocolloid confectionery product of the invention may be from 5% to 20%, preferably from 6% to 15% by weight based on the weight of the hydrocolloid confectionery product.

The following examples provide formulation and processing details for confectionery products according to preferred embodiments of the invention. The examples are intended for illustrative purposes and are not intended to be limiting.

### Example 1

A confectionery product in which starch and pectin are used as the gelling agents is produced by mixing the pectin and sugar and hydrating this mixture to form a solution. The sugar/pectin solution is mixed with the starch and the remaining ingredients, which are sugar and glucose syrup. The mixture is then cooked to gelatinise the starch and evaporate to a solid content of about 65% -80%.

The liquor is maintained hot, from 80°C to 100°C, through flavouring and acidified to a pH of 3.2 to 3.4 and the pectin begins to gelatinise. The cooked mass is transferred to a starch depositing line where it is deposited to form the required shape. The deposited mass is then dried by placing in an oven fed with hot dry air to achieve the final solids content of approx. 85%. It is then taken out of the oven and cooled to room temperature. The shape of the deposited mass is retained during the further processing of the sweet.

Further processing of the deposited mass can follow using conventional processes. The sweets can be cleaned with air to remove any starch. The sweets can then be sugar sanded by passing firstly through a steam channel followed by a rotating drum, which contains crystalline sugar. The sweets can then be panned in the usual way using a variety of different coatings such as a hard sugar coating, a soft sugar coating and a chocolate/fat-based coating etc.

### Example 2

A hydrocolloid confectionery product having the following formulation is produced in accordance with the process of example 1.

| | % by weight |
|---|---|
| High methoxyl slow set pectin | 1 % |
| Starch | 10% |
| Sugar | 33% |
| Glucose Syrup | 33% |
| Water | 20% |

The amount of sugar, glucose syrup and water can be varied, flavourings may be added as required and the mixture is acidified to achieve the desired pH.

## Claims

1. A process for the preparation of a hydrocolloid confectionery product which comprises mixing one or more hydrocolloids and the remaining ingredients of the end product, cooking the formulation mixture thus obtained, shaping the cooked mass and, after shaping the cooked mass, triggering the cooked mass to form a heat-resistant gel structure prior to drying wherein the heat-resistant gel structure is retained during further processing.

2. A process in accordance with claim 1 wherein gelatinisation of the shaped cooked mass is triggered by acidification.

3. A process in accordance with claim 2 wherein the shaped cooked mass is acidified to a pH of from 3.0 to 3.8.

4. A process in accordance with claim 1 wherein the hydrocolloid is selected from the following agarose, gellan, pectin and/or carrageenan.

5. A process in accordance with claim 4 wherein the hydrocolloid is pectin.

6. A process in accordance with claims 1 to 5 which includes starch.

7. A process in accordance with claims 1 to 6 which includes gelatin.

8. A process in accordance with claims 1 to 7 comprising the additional steps of flavouring, drying, sugar sanding, and/or panning the cooked mass.

9. A hydrocolloid confectionery product prepared in accordance with claims 1 to 8 wherein the hydrocolloid replaces at least a portion of gelatin in the product.

10. A hydrocolloid confectionery product prepared in accordance with claim 9 wherein the confectionery product is gelatin-free.

11. A hydrocolloid confectionery product prepared in accordance with claims 1 to 10 which has a bi-convex shape.

12. A hydrocolloid confectionery product prepared in accordance with claims 1 to 11 which is a gum, jelly or pastille.

13. A coated hydrocolloid confectionery product prepared in accordance with claims 1 to 12.
